# EUROPEAN PATENT APPLICATION

(11) **EP 4 835 010 A1**
(43) Date of publication of application: **04.11.2026**
(21) Application number: 24913629.2
(22) Date of filing: 19.12.2024
(51) Int. Cl.: C09C 1/50, C09C 1/60, C09C 3/04

(54) **HIGH-QUALITY CARBON BLACK POWDER USING GENERAL CARBON BLACK AND RECYCLED CARBON BLACK, AND METHOD FOR MANUFACTURING SAME**

(30) Priority: 26.12.2023 KR 20230191583; 12.12.2024 KR 20240184445
(71) Applicant: OCI Company Ltd., Seoul 04532 (KR)
(72) Inventor: JEON, Yongjin, Seongnam-si Gyeonggi-do 13212 (KR); KIM, Semin, Seongnam-si Gyeonggi-do 13212 (KR); PARK, Jaeheung, Seongnam-si Gyeonggi-do 13212 (KR)
(74) Representative: Winter, Brandl - Partnerschaft mbB
(86) International application number: PCT/KR2024/020752
(87) International publication number: WO 2025/143686

(57) **Abstract**

Disclosed are a high-quality carbon black powder using general carbon black and recycled carbon black, and a method for manufacturing same. More specifically, disclosed are a high-quality carbon black powder using general carbon black and recycled carbon black, and a method for manufacturing same, in which general carbon black and recycled carbon black are mixed and efficiently pelletized to improve productivity, reduce production process costs, and enhance product quality, thereby securing economic feasibility.

## Description

### [Technical Field]

The present invention relates to a high-quality carbon black powder using general carbon black and recycled carbon black, and a method for manufacturing the same, and more particularly, to a high-quality carbon black powder using general carbon black and recycled carbon black, and a method for manufacturing the same, which are capable of securing economic feasibility by improving product quality while reducing costs of a production process by blending general carbon black and recycled carbon black and efficiently pelletizing the same to improve productivity.

### [Background Art]

Carbon black refers to an aggregate of very fine spherical particles obtained by incompletely combusting hydrocarbons or compounds containing carbon. Carbon black is obtained by forming primary particles in a reactor and fusing the primary particles with each other to form grape cluster-shaped aggregates. Meanwhile, carbon black may be broadly classified into acetylene black and furnace black. Among these, furnace black has an advantage in that the cost is low, but has a disadvantage in that it is difficult to achieve high crystallinity compared to acetylene black.

Carbon black affects the quality of materials in which it is used depending on its own properties, including crystallinity, specific surface area, structure, particle size, and the like, which may be adjusted through various post-treatments. Carbon black is used in various fields such as industrial additives, industrial paints, coating compositions, and various printed materials.

In particular, carbon black used in tire manufacturing is an essential additive that increases the bonding strength of rubber, which is a main component of tires, and requires a purity of 99% or more. In addition, as a method for recovering carbon black from waste tires, a pyrolysis method is widely used.

As such, research on methods for recycling carbon black is being conducted in order to establish a circular economy for waste tires. Recycled carbon black (r-CB) is a product obtained by processing char generated after pyrolysis of waste tires, and is currently used by tire manufacturers in a content ratio of about 1 to 5 wt% through simple addition during manufacturing of some compounds for tires.

However, it is determined that the usage of recycled carbon black will further increase due to the strengthening of ESG regulations in the future. Accordingly, there is an increasing need for producing eco-friendly carbon black in which recycled carbon black is introduced and blended in the production process of general carbon black. The eco-friendly carbon black is a product in which a larger amount of recycled carbon black can be incorporated compared to the conventional simple addition method, and in which properties are further stabilized, and thus has high potential for use by tire manufacturers in the future.

### [Disclosure]

### [Technical Problem]

In view of the above-described technical problems, an object of the present invention is to provide a high-quality carbon black powder using general carbon black and recycled carbon black, and a method for manufacturing the same, which are capable of securing economic feasibility by improving product quality while reducing costs of a production process by blending general carbon black and recycled carbon black and efficiently pelletizing the same to improve productivity.

### [Technical Solution]

According to an embodiment of the present invention for achieving the above object, a method for manufacturing a high-quality carbon black powder using general carbon black and recycled carbon black comprises: (a) transferring general carbon black produced through a reactor of a carbon black manufacturing apparatus and recycled carbon black introduced into a reprocessing storage tank to a process bag filter to blend the general carbon black and the recycled carbon black; (b) pulverizing the general carbon black and the recycled carbon black blended in the process bag filter using a pulverizer; and (c) pelletizing the pulverized product by co-pelletization, followed by drying to form a carbon black powder.

During the blending in (a) above, the general carbon black and the recycled carbon black are separated from tail gas by the process bag filter.

In (a) above, the general carbon black used has an oil absorption number (OAN) value increased by 1 to 5 in the reactor.

The general carbon black preferably has an oil absorption number (OAN) value of 91 to 96 mL/100g.

In (a) above, the blending is performed at a ratio of 85 to 95% by weight of the general carbon black and 5 to 15% by weight of the recycled carbon black.

The recycled carbon black is more preferably blended in an amount of 8 to 12% by weight.

In (b) above, the pulverizing is performed using any one selected from a hammer mill, a high-speed mixer, a ball mill, and an air jet mill.

During the co-pelletizing in (c) above, a binder, an emulsion solution, and a solvent are added together to the pulverized product.

According to an embodiment of the present invention for achieving the above object, a high-quality carbon black powder using general carbon black and recycled carbon black is a carbon black powder manufactured by the method for manufacturing a high-quality carbon black powder using general carbon black and recycled carbon black, wherein the carbon black powder comprises 85 to 95% by weight of general carbon black and 5 to 15% by weight of recycled carbon black.

The general carbon black used has an oil absorption number (OAN) value increased by 1 to 5.

The general carbon black preferably has an oil absorption number (OAN) value of 91 to 96 mL/100g.

The recycled carbon black is more preferably included in an amount of 8 to 12% by weight.

### [Advantageous Effects]

The high-quality carbon black powder using general carbon black and recycled carbon black and the method for manufacturing the same according to the present invention can secure economic feasibility by improving product quality while reducing costs of a production process by blending general carbon black and recycled carbon black and efficiently pelletizing the same to improve productivity.

To this end, the high-quality carbon black powder using general carbon black and recycled carbon black and the method for manufacturing the same according to the present invention can improve deterioration of properties of the carbon black powder and a rubber composition by using general carbon black adjusted upward by increasing an oil absorption number (OAN) value, which is a factor affecting tensile properties, by 1 to 5 through a change in operating conditions of a reactor.

As a result, the high-quality carbon black powder using general carbon black and recycled carbon black and the method for manufacturing the same according to the present invention can efficiently produce a high-quality carbon black powder equivalent to carbon black consisting only of general carbon black while increasing an amount of recycled carbon black introduced by blending general carbon black and recycled carbon black and pelletizing the same.

In addition, when utilized in the production of various products, particularly tires, plastics, and other rubber-based products, the carbon black powder manufactured by the method according to the present invention can improve product quality without deterioration of properties even though the amount of recycled carbon black introduced is increased, thereby contributing to sustainable product production by providing an environmentally friendly and economical manufacturing process.

In addition to the above-described effects, the specific effects of the present disclosure will be described together with the specific matters for implementing the disclosure below.

### [Brief Description of Drawings]

FIG. 1 is a process flowchart illustrating a method for manufacturing a high-quality carbon black powder using general carbon black and recycled carbon black according to an embodiment of the present invention.
FIG. 2 is a process schematic diagram illustrating a method for manufacturing a high-quality carbon black powder using general carbon black and recycled carbon black according to an embodiment of the present invention.

### [Best Modes of the Invention]

The above-described objects, features, and advantages will be described in detail below with reference to the attached drawings, and thus those skilled in the art may easily implement the technical idea of the present invention. In describing the present invention, if it is determined that detailed descriptions of the known technology related to the present invention may unnecessarily obscure the gist of the present invention, the detailed description thereof will be omitted. Hereinafter, preferred embodiments according to the present invention will be described in detail with reference to the accompanying drawings. In the drawings, the same reference numerals are used to indicate the same or similar components.

In the present specification, descriptions that are not set forth herein but can be sufficiently and technically inferred by a person skilled in the art to which the present disclosure pertains will be omitted.

In the present specification, when any component is disposed "on (or under)" a component or "above (or below)" a component, this may mean not only that any component is disposed in contact with the upper surface (or lower surface) of said component, but also that other components may be interposed between said component and any component disposed on (or under) said component.

As used herein, singular expressions include plural expressions unless the context clearly implies otherwise. As used herein, terms such as "include", "have", or "comprise" should not be construed to necessarily include all of the various components described in the specification, and should be construed to mean that some of the components may not be included, or that additional components may be further included.

Hereinafter, a high-quality carbon black powder using general carbon black and recycled carbon black and a method for manufacturing the same according to a preferred embodiment of the present invention will be described in detail with reference to the accompanying drawings.

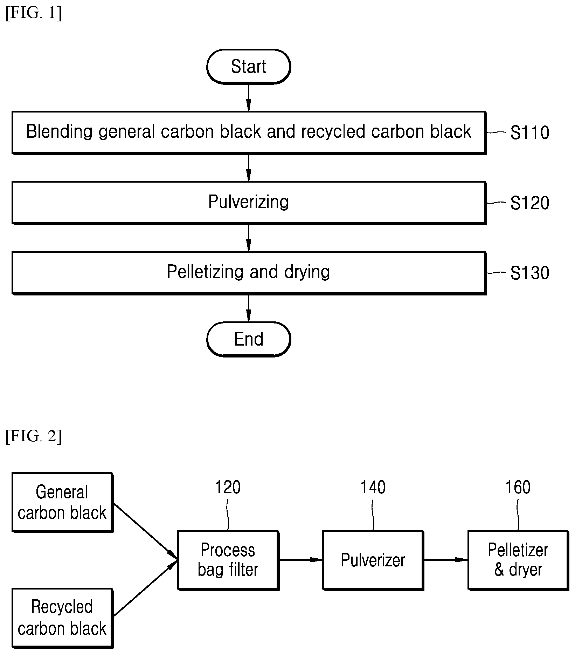

FIG. 1 is a process flowchart illustrating a method for manufacturing a high-quality carbon black powder using general carbon black and recycled carbon black according to an embodiment of the present invention, and FIG. 2 is a process schematic diagram illustrating a method for manufacturing a high-quality carbon black powder using general carbon black and recycled carbon black according to an embodiment of the present invention.

Referring to FIG. 1 and FIG. 2, the method for manufacturing a high-quality carbon black powder using general carbon black and recycled carbon black according to an embodiment of the present invention includes a step of blending general carbon black and recycled carbon black (S110), a pulverizing step (S120), and a pelletizing and drying step (S130).

### Blending of General Carbon Black and Recycled Carbon Black

In the step of blending general carbon black and recycled carbon black (S110), general carbon black produced through a reactor of a carbon black manufacturing apparatus and recycled carbon black introduced into a reprocessing storage tank are transferred to a process bag filter 120 to blend the general carbon black and the recycled carbon black.

In the specification of the present invention, the term "general carbon black" may be referred to as normal carbon black, general CB, or n-CB, and all of these are defined as synonymous terms.

During the blending, the general carbon black and the recycled carbon black are separated from tail gas by the process bag filter 120. The tail gas separated from carbon black by the process bag filter 120 as described above may be supplied to a dryer or utilized as a boiler fuel gas.

In this step, the general carbon black and the recycled carbon black are preferably blended at a ratio of 85 to 95% by weight of general carbon black and 5 to 15% by weight of recycled carbon black. More preferably, the general carbon black and the recycled carbon black are blended at a ratio of 88 to 92% by weight of general carbon black and 8 to 12% by weight of recycled carbon black.

When the recycled carbon black is blended in an amount of less than 5% by weight based on 100% by weight of the total of the general carbon black and the recycled carbon black, the amount of recycled carbon black introduced is too small, and thus the recycled carbon black may not be sufficiently recycled, resulting in poor economic feasibility. Conversely, when the recycled carbon black is blended in an amount exceeding 15% by weight based on 100% by weight of the total of the general carbon black and the recycled carbon black, the amount of recycled carbon black introduced is excessive, and thus deterioration of properties of the carbon black powder and a rubber composition containing the carbon black powder may occur.

In particular, as the general carbon black, it is preferable to use one in which an oil absorption number (OAN) value is increased by 1 to 5 in a reactor. More specifically, it is preferable to use general carbon black having an oil absorption number (OAN) value of 91 to 96 mL/100g. It has been confirmed through experiments that, when the general carbon black adjusted upward by increasing an oil absorption number (OAN) value, which is a factor affecting tensile properties, by 1 to 5 through a change in operating conditions of a reactor as described above is introduced, deterioration of properties of the carbon black powder and a rubber composition is significantly improved.

### Pulverizing

In the pulverizing step (S120), the general carbon black and the recycled carbon black blended in the process bag filter 120 are pulverized by a pulverizer 140.

In this step, the pulverizing may be performed using any one selected from a hammer mill, a high-speed mixer, a ball mill, and an air jet mill, and among these, it is preferable to perform the pulverizing using a high-speed rotating hammer mill. Through the pulverizing step (S120), the general carbon black and the recycled carbon black may be pulverized into fine powder having an average diameter of 500 µm or less.

### Pelletizing and Drying

In the pelletizing and drying step (S130), the pulverized product is pelletized by co-pelletization, followed by drying to form a carbon black powder.

To this end, a pelletizer and a dryer 160 may be sequentially installed at a rear end of the pulverizer 140.

During the co-pelletizing, in order to facilitate transfer and handling of carbon black, which is the pulverized product in a fine powder state, it is preferable to add a binder, an emulsion solution, and a solvent together to the pulverized product. During the co-pelletizing, a binder, an emulsion solution, and a solvent are added together to the pulverized product as described above, and the pulverized product is granulated into particles having a size of 1 to 2 mm through a rotational centrifugal action to be pelletized.

Thereafter, moisture is evaporated using a heat source and an air flow, and particles of the pulverized product are dried to obtain carbon black particles. During the drying, it is preferable to perform residence drying at 150 to 250°C for 1 to 2 hours in order to remove moisture (50% → less than 0.5%) in the pulverized product. In addition, it is preferable to use a dryer in the form of a rotating cylinder, and a desired moisture content may be obtained by adjusting temperature and time accurately during the drying process.

The carbon black powder obtained after completing the pelletizing and drying step (S130) may be packaged as a final product through a packaging process after exiting the dryer.

Thereby, the method for manufacturing a high-quality carbon black powder using general carbon black and recycled carbon black according to an embodiment of the present invention may be terminated.

The high-quality carbon black powder using general carbon black and recycled carbon black and the method for manufacturing the same according to the above-described embodiment of the present invention can secure economic feasibility by improving product quality while reducing costs of a production process by blending general carbon black and recycled carbon black and efficiently pelletizing the same to improve productivity.

To this end, the high-quality carbon black powder using general carbon black and recycled carbon black and the method for manufacturing the same according to the embodiment of the present invention can improve deterioration of properties of the carbon black powder and a rubber composition by using general carbon black adjusted upward by increasing an oil absorption number (OAN) value, which is a factor affecting tensile properties, by 1 to 5 through a change in operating conditions of a reactor.

As a result, the high-quality carbon black powder using general carbon black and recycled carbon black and the method for manufacturing the same according to the embodiment of the present invention can efficiently produce a high-quality carbon black powder equivalent to carbon black consisting only of general carbon black while increasing an amount of recycled carbon black introduced by blending general carbon black and recycled carbon black and pelletizing the same.

In addition, when utilized in the production of various products, particularly tires, plastics, and other rubber-based products, the carbon black powder manufactured by the method according to the embodiment of the present invention can improve product quality without deterioration of properties even though the amount of recycled carbon black introduced is increased, thereby contributing to sustainable product production by providing an environmentally friendly and economical manufacturing process.

### Example

Hereinafter, the configuration and operation of the present invention will be described in more detail through preferred examples of the present invention. However, these are presented as preferred examples of the present invention and should not be construed as limiting the present invention in any sense.

Matters not described herein may be sufficiently technically inferred by those skilled in the art, and thus detailed descriptions thereof will be omitted.

### 1. Lab Blending Evaluation

Table 1 below shows results of a Lab blending evaluation for carbon black powder produced according to blending ratios of general CB (normal carbon black, general carbon black) and r-CB (recycled carbon black), and a rubber composition using the same. In this case, for the purpose of confirming tendencies before co-pelletizing, a simple blending method was applied identically to a tire manufacturer to blend general carbon black and recycled carbon black at a lab scale according to blending ratios shown in Table 1. At this time, as the general carbon black, carbon black N660, which is a trade name, was used, and as the recycled carbon black, a product of Enrestec was obtained and used.

In addition, a master batch was prepared by adding carbon black powder, zinc oxide, stearic acid, and TDAE oil to raw rubber, and adding 6PPD and RD as additives, followed by stirring at 150°C for 5 minutes. Subsequently, sulfur (S) and NS were added to the master batch, followed by stirring at 110°C for 2 minutes to prepare a rubber composition for tires.

### (1) Unvulcanized Properties

### 1) IA (Iodine Adsorption Number)

This is a method for analyzing a specific surface area of carbon black based on an iodine adsorption amount. It was measured in accordance with ASTM D1510. The higher the iodine adsorption amount, the smaller the particle size of carbon black becomes, and conversely, the lower the iodine adsorption amount, the larger the particle size becomes.

### 2) OAN (Oil Absorption number)

An OAN value is a value represented by evaluating an oil absorption amount of dibutyl phthalate (DBP) that can be contained in 100 g of carbon black. The OAN was measured in accordance with an analysis method based on ASTM D2414 (measuring an amount (mL/100g) of dibutyl phthalate oil adsorbed by 100 g of carbon black). A higher OAN value indicates that a structure of carbon black is more complex and more developed.

### 3) Tint

Tint was measured in accordance with ASTM D3265. Tint is a value indicating a color of carbon black, and a higher Tint means that a particle size of carbon black is smaller and a structure thereof is simpler. Conversely, a lower Tint means that a particle size of carbon black is larger and a structure thereof is more complex.

### 4) Ash

Ash is used to measure impurities in carbon black, and measures the content of inorganic impurities remaining after burning carbon black at a temperature of 550°C.

The reason for measuring Ash is that, when an Ash content is high during production of a carbon black compound, carbon black is not effectively dispersed, which results from a decrease in a surface area of the carbon black compound and hindrance to interaction with rubber.

In the present invention, during blending of general carbon black and recycled carbon black, the Ash content is utilized as a numerical value for predicting and verifying a ratio at which recycled carbon black is blended.

### 5) Mooney Viscosity (ML1+4, 100°C)

Mooney viscosity was measured for each rubber composition prepared in each Example in accordance with ASTM D 1646: Rubber from Natural or Synthetic Sources-Viscosity and Vulcanization Characteristics (Mooney Viscometer). In 50-ML1+4(100°C), 50-M is a viscosity number, L indicates use of a LARGE ROTOR, 1 indicates preheating for 1 minute before operating a motor, 4 indicates a prescribed measurement time, and 100°C indicates a measurement temperature. A higher Mooney viscosity means that dispersibility of components within the rubber composition is lower.

### (2) Vulcanized Properties

Tensile stress (M300) and elongation (EL) were measured in accordance with ASTM D 412-98a: Standard Test Methods for Vulcanized Rubber and Thermoplastic Elastomers-Tension.

**[Table 1]**

| **Properties** | | **General CB** | **r-CB** | **r-CB blending ratio** | | | | |
|---|---|---|---|---|---|---|---|---|
| | | **100 wt%** | **100 wt%** | **5 wt%** | **8 wt%** | **10 wt%** | **15 wt%** | **25 wt%** |
| **Carbon** | **IA (g/kg)** | 35 | 66 | 36 | 37 | 42 | 45 | 55 |
| **black powder** | **OAN (ml/100g)** | 90 | 84 | 89 | 88 | 85 | 84 | 78 |
| | **Tint (% vs ITRB)** | 55 | 41 | 55 | 54 | 53 | 53 | 53 |
| | **Ash (%)** | 0.2 | 19.5 | 0.6 | 1.8 | 2.1 | 2.3 | 4.1 |
| **Rubber composition (Compound)** | **MV@125 °C (MU)** | 60 | 57 | 59 | 58 | 57 | 57 | 55 |
| | **M300 (kgf/cm²)** | 100 | 77 | 99 | 95 | 92 | 89 | 78 |
| | **EL (%)** | 100 | 99 | 98 | 94 | 92 | 90 | 82 |
| | **TB (kgf/cm²)** | 100 | 89 | 98 | 96 | 94 | 93 | 88 |

As shown in Table 1 above, as a result of measuring properties of the carbon black powder of a lab-scale blended product, properties of carbon black affecting rubber properties, such as IA and OAN, were changed when 15 wt% or more of recycled carbon black was simply added.

In addition, a result of analysis of the rubber composition (compound) also showed that deterioration of tensile properties occurred when 15 wt% or more of recycled carbon black was simply added. Through this, it was confirmed that, when general CB and r-CB are simply blended, it is preferable to introduce r-CB in an amount of 15 wt% or less.

### 2. Pilot Production Evaluation (Simple Co-pelletization / Co-pelletization after Changing Operating Conditions)

Table 2 below shows pilot production evaluation results for carbon black powder produced by simple co-pelletizing at a blending ratio of general CB (90 wt%) and r-CB (10 wt%), and a rubber composition using the same. Table 3 shows pilot production evaluation results for carbon black powder produced by co-pelletizing at a blending ratio of general CB (90 wt%) and r-CB (10 wt%) after changing operating conditions of a reactor, and a rubber composition using the same.

In this case, recycled carbon black was introduced in an amount of up to 10 wt% based on daily production. In a field production line, 10 tons of recycled carbon black were introduced for 8 hours, and for 4 hours, co-pelletizing was performed by applying a method in which recycled carbon black was simply blended with general carbon black from a process bag filter stage without changing operating conditions of the reactor. For the remaining 4 hours, the co-pelletizing was performed by controlling a concentration of an additive in the reactor to 0.1 to 1% and lowering an introduction amount to 1 to 5 L to increase an oil absorption number (OAN) value by 1 to 5.

**[Table 2]**

| **Properties** | | **General CB** | **r-CB** | **r-CB blending ratio** | | | |
|---|---|---|---|---|---|---|---|
| | | **100 wt%** | **100 wt%** | **5 wt%** | **10 wt%** | **15 wt%** | **25 wt%** |
| **Carbon black powder** | **IA (g/kg)** | 35 | 66 | 36.5 | 38 | 39.5 | 43 |
| | **OAN (ml/100g)** | 90 | 84 | 89 | 88 | 87 | 85 |
| | **Tint (% vs ITRB)** | 55 | 41 | 54 | 53 | 52 | 50 |
| | **Ash (%)** | 0.2 | 19.5 | 1.1 | 2 | 3 | 5 |
| | **MV@125°C (MU)** | 60 | 57 | 58 | 57 | 56 | 55 |
| **Rubber composition (Compound)** | **M300 (kgf/cm²)** | 100 | 77 | 99.5 | 99 | 98 | 96 |
| | **EL (%)** | 100 | 99 | 99.5 | 98 | 97.5 | 96 |
| | **TB (kgf/cm²)** | 100 | 89 | 99 | 98 | 97 | 95 |

**[Table 3]**

| **Properties** | | **General CB** | **r-CB** | **r-CB blending ratio** | | | |
|---|---|---|---|---|---|---|---|
| | | **100 wt%** | **100 wt%** | **5 wt%** | **10 wt%** | **15 wt%** | **25 wt%** |
| **Carbon black powder** | **IA (g/kg)** | 35 | 66 | 36 | 37 | 37 | 38 |
| | **OAN (ml/100g)** | 95 | 84 | 93 | 92 | 91 | 91 |
| | **Tint (% vs ITRB)** | 55 | 41 | 56 | 57 | 56 | 55 |
| | **Ash (%)** | 0.2 | 19.5 | 1.1 | 2.1 | 3.2 | 5.4 |
| **Rubber composition (Compound)** | **MV@125°C (MU)** | 60 | 57 | 59 | 59 | 58 | 57 |
| | **M300 (kgf/cm²)** | 100 | 77 | 99 | 100 | 98 | 98 |
| | **EL (%)** | 100 | 99 | 100 | 100 | 99 | 99 |
| | **TB (kgf/cm²)** | 100 | 89 | 99 | 100 | 98 | 98 |

First, as can be seen from Table 2 above, as a result of measuring properties of the carbon black powder and the rubber composition after performing simple co-pelletizing, properties of the carbon black powder were at an equivalent level, but deterioration of properties was confirmed in the rubber composition (compound) compared to general carbon black.

However, when compared with property results conducted at a lab scale, tensile properties (M300, Elong, TB) were confirmed to show an increasing tendency, and thus it was determined that a degree of blending between the general carbon black and the recycled carbon black was improved through the co-pelletizing method starting from the process bag filter process, as compared to the simple blending method as in the lab scale evaluation.

In particular, at a blending ratio of 10 wt% of recycled carbon black, it could be seen that economic and environmental advantages were provided while securing properties at a level similar to those of general carbon black, and it was confirmed that some deterioration of properties occurred as the content of the recycled carbon black increased to blending ratios of 15 to 25 wt%.

Accordingly, it was determined that a range of 5 to 10 wt% is optimal as a blending ratio of the recycled carbon black in terms of providing a balance between economic feasibility and properties.

Meanwhile, as can be seen from Table 3 above, as a result of evaluating properties of the carbon black powder and the rubber composition after performing co-pelletizing following a change in operating conditions of the reactor according to introducing the recycled carbon black at blending ratios of 5 wt%, 10 wt%, 15 wt%, and 25 wt%, it was confirmed that all properties except for Ash content were improved compared to properties of the simple co-pelletizing, and thus co-pelletized carbon black at a level of general carbon black can be produced.

### 3. Conclusion

In conclusion, from the two evaluation results obtained through the co-pelletizing process, it could be confirmed that a series of improvements in properties of the blend of general carbon black and recycled carbon black were achieved.

In particular, in the result of increasing an oil absorption number (OAN) value in a reactor, it could be confirmed that, as the OAN value increased, a surface area increased, which indicates a change in surface characteristics of a material.

In addition, also in properties of the rubber composition (compound), as a result of increasing the OAN value, it could be confirmed that properties at a level equivalent to those of general carbon black were secured.

In particular, as the OAN value, which is one of main influencing factors determining tensile properties (M300, Elongation, TB), was improved, deterioration of properties due to introduction of recycled carbon black was improved, which suggests the efficiency and successful improvement of properties of the new manufacturing method.

Although the above description has focused on the embodiments of the present invention, various changes or modifications can be made by those skilled in the art to which the present invention belongs. Such changes and modifications can be said to be included in the present invention as long as they do not depart from the scope of the technical idea provided by the present invention. Accordingly, the scope of rights of the present invention should be determined by the claims described below.

### [Description of Reference Numerals]

S110: Step of blending general carbon black and recycled carbon black
S120: Pulverizing step
S130: Pelletizing and drying step

## Claims

1. A method for manufacturing a high-quality carbon black powder using general carbon black and recycled carbon black, the method comprising:
(a) transferring general carbon black produced through a reactor of a carbon black manufacturing apparatus and recycled carbon black introduced into a reprocessing storage tank to a process bag filter to blend the general carbon black and the recycled carbon black;
(b) pulverizing the general carbon black and the recycled carbon black blended in the process bag filter using a pulverizer; and (c) pelletizing the pulverized product by co-pelletization, followed by drying to form a carbon black powder.

2. The method of claim 1, wherein during the blending in (a) above, the general carbon black and the recycled carbon black are separated from tail gas by the process bag filter.

3. The method of claim 1, wherein in (a) above, the general carbon black used has an oil absorption number (OAN) value increased by 1 to 5 in the reactor.

4. The method of claim 3, wherein the general carbon black used has an oil absorption number (OAN) value of 91 to 96 mL/100g.

5. The method of claim 1, wherein in (a) above, the blending is performed at a ratio of 85 to 95% by weight of the general carbon black and 5 to 15% by weight of the recycled carbon black.

6. The method of claim 5, wherein the recycled carbon black is blended in an amount of 8 to 12% by weight.

7. The method of claim 1, wherein in (b) above, the pulverizing is performed using any one selected from a hammer mill, a high-speed mixer, a ball mill, and an air jet mill.

8. The method of claim 1, wherein during the co-pelletizing in (c) above, a binder, an emulsion solution, and a solvent are added together to the pulverized product.

9. A high-quality carbon black powder using general carbon black and recycled carbon black, wherein the carbon black powder is manufactured by the method according to any one of claims 1 to 8, and
wherein the carbon black powder comprises 85 to 95% by weight of general carbon black and 5 to 15% by weight of recycled carbon black.

10. The carbon black powder of claim 9, wherein the general carbon black used has an oil absorption number (OAN) value increased by 1 to 5.

11. The carbon black powder of claim 10, wherein the general carbon black used has an oil absorption number (OAN) value of 91 to 96 mL/100g.

12. The carbon black powder of claim 9, wherein the recycled carbon black is included in an amount of 8 to 12% by weight.
